# EUROPÄISCHE PATENTANMELDUNG

(11) **EP 4 074 435 A2**
(43) Veröffentlichungstag der Anmeldung: **19.10.2022**
(21) Anmeldenummer: 22020078.6
(22) Anmeldetag: 23.02.2022
(51) Int. Cl.: B22F 1/052, A44C 27/00, B22F 1/065, B22F 10/20, B22F 10/28, B22F 10/64, B33Y 10/00, B33Y 40/20, B33Y 70/00, C22C 1/04, C22C 5/04

(54) **PULVER AUS SPHÄRISCHEN PARTIKELN EINER EDELMETALL-LEGIERUNG ENTHALTEND PLATIN ODER PALLADIUM, VERWENDUNG DIESES PULVERS IN EINEM PULVERBASTIERIEN FERIGUNGSVERFAHREN ZUR HERSTELLUNG EINES DREIDIMENSIONALEN GEGENSTANDS SOWIE EIN ADDITIVES VERFAHREN ZUR HERSTELLUNG EINES DREIDIMENSIONALEN GEGENSTANDS UNTER VERWENDUNG DES VORGENANNIEN PULVERS**

(30) Priorität: 26.02.2021 DE 102021001053; 26.02.2021 DE 202021000763 U
(71) Anmelder: C. Hafner GmbH + Co. KG, 71299 Wimsheim (DE)
(72) Erfinder: Heinrich, Jochen, 71299 Wimsheim (DE); Hünsche, Ingwar, 71299 Wimsheim (DE); Laag, Thomas, 71299 Wimsheim (DE)
(74) Vertreter: Leitner, Waldemar

(57) **Zusammenfassung**

Die Erfindung betrifft ein Pulver aus sphärischen Partikeln einer Edelmetall-Legierung, welche als primäre Legierungskomponente Platin oder Palladium in einem Anteil von 95 bis 99,5 Gew.-%, vorzugsweise in einem Anteil von 95 bis 96 Gew.-% enthält.

Erfindungsgemäß ist vorgesehen, dass die Legierung als sekundäre Legierungskomponente 0,5 bis 5 Gew.-%, vorzugsweise 1 bis 5 Gew.-% Gallium enthält, wobei sich die Anteile der primären und der sekundären Legierungskomponente, von üblichen Verunreinigungen und Spurenelementen sowie unter Berücksichtigung von metallurgischen Toleranzen abgesehen, zu 100 Gew.-% ergänzen, und dass das Pulver eine Partikelgrößenverteilung mit einem d₁₀-Wert von größer gleich 5 µm und/oder einem d₉₀-Wert von kleiner gleich 100 µm, vorzugsweise mit einem d₁₀-Wert von größer gleich 5 µm und/oder einem d₉₀-Wert von kleiner gleich 50 µm und weiter vorzugsweise mit einem d₁₀-Wert von größer gleich 10 µm und/oder einem d₉₀-Wert von kleiner gleich 45 µm besitzt.

## Beschreibung

Die Erfindung betrifft ein Pulver aus sphärischen Partikeln einer Edelmetall-Legierung, welche Platin oder Palladium, in einem Anteil von größer gleich 95 Gew.-%, insbesondere in einem Anteil zwischen 95 und 99,5 Gew.-%, weiter insbesondere in einem Anteil von 95 bis 96 Gew.-% enthält, die Verwendung eines derartigen Pulvers in einem pulverbasierten Fertigungsverfahren zur Herstellung eines dreidimensionalen Gegenstands sowie ein additives Verfahren zur Herstellung eines dreidimensionalen Gegenstands unter Verwendung der vorgenannten Legierung.

Legierungen, die eines oder mehrere Metalle aus der Platingruppe enthalten, sind bekannt und werden bevorzugt zur Herstellung von Luxusgütern wie Schmuckstücken, Uhren, insbesondere Uhrengehäuse, und Schreibgeräten sowie Teilen davon eingesetzt. Insbesondere in der Schmuck- und Uhrenindustrie ist eine besonders weiße Metallfarbe einer Edelmetall-Legierung gewünscht, da hierdurch der Glanz von Steinen, insbesondere von Edelsteinen wie Diamanten, welche ein aus dieser Edelmetall-Legierung hergestelltes Schmuckstück aufweist, in besonders guter Art und Weise unterstützt wird. Platin sowie hochlegierte Platinlegierungen wie z. B. eine Legierung mit 95 Gew.-% Platin besitzen für die meisten in der Schmuck- und Uhrenindustrie auftretenden Anwendungen eine hinreichend weiße Farbe und werden allgemein als besonders hochwertig angesehen.

Gleichzeitig stellen diese Legierungen die schwierigsten Materialien in Bezug auf Verarbeitung und/oder Raffination dar. Käufer aus derartigen Platinlegierungen hergestellten Luxusgütern erwarten aber nicht nur eine weiße Farbe des sie interessierenden Schmuckstücks, sondern auch eine hohe qualitative Fertigung desselben sowie einen geringen Verschleiß. Die auf gußtechnischen Technologien basierende traditionelle Verarbeitung von Platinlegierungen oder von Legierungen, welche eines oder mehrere Metalle der Platingruppe enthalten, umfasst üblicherweise die Herstellung von Halbzeugen. Eine derartige Halbzeug-Herstellung ist ein mehrstufiger Prozess, der mit dem Legieren und Gießen von Barren oder Stangen aus der vorgenannten Legierung beginnt. Typischerweise werden hierzu Vakuuminduktionsschmelzöfen verwendet, um die hohen Schmelztemperaturen von Metallen der Platingruppe zu erreichen. Daran schließen sich ein oder mehrere Umform- und Glühprozesse an. Das in Barren- oder Stangenform vorliegende Ausgangsmaterial wird dann zu Halbzeugen gegossen, die eine Gestalt nahe ihrer endgültigen Form aufweisen. Insbesondere das Gießen von Platinlegierungen ist schwierig und nicht mit jeder derartigen Legierung möglich. Die vorgenannten Legierungen sind oft schwer gießbar und/oder schwer verformbar und/oder nicht schmelzmetallurgisch verarbeitbar.

Des Weiteren ist es bekannt, dreidimensionale Gegenstände durch eine spanende Bearbeitung von aus den vorgenannten Legierungen hergestellten Halbzeugen herzustellen. Nachteilig daran ist, dass die Herstellungskosten aufgrund des hohen Preises von Platinlegierungen, insbesondere von hochhaltigen Platinlegierungen wie einer 95 %-igen Platinlegierung, hoch sind, da derartige Artikel aus dem vollen Material oder entsprechenden Stanzteilen gefräst werden und bei diesem Bearbeitungsvorgang ein hoher Materialverlust in Form von Platinmetall-Resten anfällt.

Des Weiteren ist es noch bekannt, aus einem Edelmetallpulver mittels eines additiven Fertigungsverfahrens wie einem Auftragsschweißen oder eines Pulverbett-basierten Verfahrens dreidimensionale Körper herzustellen. Das europäische Patent EP 1 677 930 B1 beschreibt eine Pulverbett-basierte additive Fertigung von Edelmetallprodukten mit komplexen Geometrien. Hierbei wird das Edelmetallpulver mittels eines Laserstrahls aufgeschmolzen. Das europäische Patent EP 3 142 814 B1 beschreibt die Verwendung von Goldpulverlegierungen zur Herstellung von Schmuckstücken durch selektives Laserschmelzen.

Die EP 3 216 545 B1 beschreibt ein Edelmetallpulver und dessen Verwendung zur Herstellung von Bauteilen. Das hierzu verwendete Edelmetallpulver ist Platin oder ein sonstiges Metall der Platingruppe oder eine Legierung aus mindestens zwei dieser Platinmetalle. Diese Edelmetallpartikel weisen eine Masseverteilungssummenkurve mit einem d₁₀-Wert von größer gleich 10 µm und einem d₉₀-Wert von kleiner gleich 80 µm. Das in dieser Druckschrift beschriebene additive Fertigungsverfahren zur Herstellung eines Bauteils umfasst hierbei folgende Schritte: In einem ersten Schritt wird das Pulver auf einem Substrat in einem Bauraum aufgetragen. Dann folgt ein zumindest teilweises Aufschmelzen des Pulvers der ersten Schicht mit energiereicher Strahlung und Erstarrenlassen des aufgeschmolzenen Pulvers. Im Anschluss wird eine weitere Schicht des Pulvers auf der ersten Schicht aufgetragen, wiederum zumindest teilweise aufgeschmolzen und dann erstarren gelassen. Der vorgenannte Schritt wird solange wiederholt, bis das herzustellende Bauteil additiv gefertigt wurde.

Es ist Aufgabe der vorliegenden Erfindung, eine Platin oder Palladium enthaltende Legierung der eingangs genannten Art derart weiterzubilden, dass sie insbesondere für eine pulvermetallurgische Herstellung eines dreidimensionalen Körpers besonders geeignet ist. Auch soll ein aus der erfindungsgemäßen Legierung hergestelltes Pulver sowie die Verwendung dieses Pulvers zur pulverbasierten Herstellung, insbesondere zur additiven Herstellung, eines dreidimensionalen Körpers und ein Verfahren zur Herstellung eines derartigen dreidimensionalen Körpers mittels eines additiven Fertigungsverfahrens vorgeschlagen werden.

Zur Lösung dieser Aufgabe wird vorgeschlagen, dass die Legierung als sekundäre Legierungskomponente 0,5 bis 5 Gew.-%, vorzugsweise 1 bis 5 Gew.-% Gallium enthält, wobei sich die Anteile der primären und der sekundären Legierungskomponente, von üblichen Verunreinigungen und Spurenelementen sowie unter Berücksichtigung von metallurgischen Toleranzen abgesehen, zu 100 Gew.-% ergänzen, und dass das Pulver eine Partikelgrößenverteilung mit einem d₁₀-Wert von größer gleich 5 µm und/oder einem d₉₀-Wert von kleiner gleich 100 µm, vorzugsweise mit einem d₁₀-Wert von größer gleich 5 µm und/oder einem d₉₀-Wert von kleiner gleich 50 µm und weiter vorzugsweise mit einem d₁₀-Wert von größer gleich 10 µm und/oder einem d₉₀-Wert von kleiner gleich 45 µm besitzt.

Die erfindungsgemäße Verwendung des edelmetallhaltigen Pulvers zur pulverbasierten Fertigung eines dreidimensionalen Körpers zeichnet sich dadurch aus, dass ein wie vorstehend definiertes Edelmetallpulver verwendet wird.

Das erfindungsgemäße additive Fertigungsverfahren zur Herstellung eines dreidimensionalen Körpers ist dadurch gekennzeichnet, dass das erfindungsgemäße Edelmetallpulver verwendet wird und folgende Schritte umfasst:
Aufbringen des erfindungsgemäßen Pulvers in Form einer ersten Schicht auf einem Substrat,
   a) zumindest teilweise Aufschmelzen des Pulvers der ersten Schicht mit einer energiereichen Strahlung, insbesondere einer Laserstrahlung, und Erstarrenlassen des aufgeschmolzenen Pulvers,
   b) Aufbringen einer weiteren Schicht des Pulvers auf der ersten Schicht,
   c) zumindest teilweise Aufschmelzen des Pulvers der weiteren Schicht mit der energiereichen Strahlung und Erstarrenlassen des aufgeschmolzenen Pulvers und
   d) Wiederholen der Schritte c) und d).

Durch die erfindungsgemäßen Maßnahmen wird in vorteilhafter Art und Weise eine Edelmetall-Legierung sowie ein aus dieser Legierung hergestelltes Edelmetallpulver geschaffen, welches sich in besonders hohem Maße für die pulverbasierte Fertigung von dreidimensionalen Gegenständen, insbesondere Schmuck wie Schmuckstücke, Uhren, Schreibgeräte oder Teile davon aus Platin oder Palladium eignet. Die erfindungsgemäße Legierung ermöglicht die Substitution von schmelzmetallurgischen Methoden zur Formgebung derartiger dreidimensionaler Gegenstände durch pulvermetallurgische Verfahren wie z. B. additive Fertigungsverfahren, Metallpulverspritzgußverfahren, Schmelz- oder Sinterverfahren mittels energiereicher Strahlung, um nur einige Beispiele zu nennen. Ein weiterer Vorteil der erfindungsgemäßen Legierung ist in der Freiheit der Legierungszusammensetzung zu sehen, da bei der erfindungsgemäßen Legierung keine Einschränkungen seitens der pulverbasierten Verarbeitungsverfahren bestehen und die Möglichkeit der Optimierung der Eigenschaften für einen spezifischen Einsatz gegeben ist. Zum Beispiel kann die Härte der bei der pulvermetallurgischen Herstellung verwendeten Legierung maximiert werden. Dies besitzt den Vorteil, dass die Kratzfestigkeit und/oder der Verschleiß von Kanten und Flächen der aus der erfindungsgemäßen Legierung hergestellten Luxusgüter wie Schmuckstücke, Uhren, insbesondere Uhrengehäuse, Schreibgeräte sowie Teile der vorgenannten Produkte, um nur einige Beispiele zu nennen, besonders hoch ist. Die hohe Festigkeit der erfindungsgemäßen Legierung eröffnet in vorteilhafter Art und Weise neue konstruktive Möglichkeiten für derartige Luxusgüter. Pulverbasierte Fertigungsverfahren unter Verwendung der erfindungsgemäßen Legierung zeichnen sich durch eine Effizienz hinsichtlich Verarbeitungsaufwand, Materialeinsatz und Recyclingmenge aus, was insbesondere bei hochpreisigen Ausgangsmaterialien wie Platin und Palladium von Vorteil ist.

Eine vorteilhafte Weiterbildung der Erfindung sieht vor, dass bei einer platinbasierten Legierung 0,05 bis 5 Gew.-%, vorzugsweise 1 bis 5 Gew.-%, weiter vorzugsweise 2 bis 3 Gew.-% der sekundären Legierungskomponente durch mindestens ein Metall aus der Gruppe Indium, Aluminium und Zinn ersetzt ist. Diese erfindungsgemäße Maßnahme besitzt den Vorteil, dass die vorgenannten Metalle der dritten und vierten Hauptgruppe des Periodensystems intermetallische Phasen nach dem Muster Pt3X bilden, wobei X für Indium, Aluminium oder Zinn steht, und eine sinkende Löslichkeit der vorgenannten Metalle Indium, Aluminium und Zinn im Platin-Mischkristall mit fallenden Temperaturen aufweisen.

Eine weitere vorteilhafte Weiterbildung der Erfindung sieht vor, dass 0,05 bis 4,5 Gew.-%, vorzugsweise 1 bis 4 Gew.-%, weiter vorzugsweise 2 bis 3 Gew.-% der primären Legierungskomponente durch mindestens ein Metall aus der Gruppe Kupfer, Silber und Gold ersetzt ist, oder dass 0,05 bis 4,5 Gew.-%, vorzugsweise 1 bis 4 Gew.-%, weiter vorzugsweise 2 bis 3 Gew.-% der primären Legierungskomponente durch mindestens ein Metall aus der Gruppe Iridium, Ruthenium und Rhodium ersetzt ist. Die erfindungsgemäßen Maßnahmen besitzen den Vorteil, dass die erfindungsgemäße Legierung eine bessere Korrosionsbeständigkeit und eine gute Mischkristallverfestigung aufweist.

Eine weitere vorteilhafte Weiterbildung der Erfindung sieht vor, dass 0,05 bis 4,5 Gew.-%, vorzugsweise 1 bis 4 Gew.-%, weiter vorzugsweise 2 bis 3 Gew.-% der primären Legierungskomponente durch mindestens eines der Eisenmetalle Eisen und Mangan ersetzt ist.

Eine weitere vorteilhafte Weiterbildung der Erfindung sieht vor, dass ein Anteil zwischen 0,05 bis 4,5 Gew.-%, vorzugsweise ein Anteil von 1 bis 4 Gew.-%, weiter vorzugsweise ein Anteil von 2 bis 3 Gew.-% der primären Legierungskomponente durch mindestens ein Refraktärmetall der sechsten Nebengruppe (Chrom, Molybdän, Wolfram) und/oder mindestens ein Refraktärmetall der fünften Nebengruppe (Vanadium, Niob und Tantal) und/oder mindestens ein Refraktärmetall der vierten Nebengruppe (Zirkonium, Hafnium) ersetzt ist.

Die beiden vorgenannten vorteilhaften Weiterbildungen der Erfindung besitzen den Vorteil, dass durch den Zusatz der vorgenannten Eisenmetalle und/oder Refraktärmetalle eine signifikante Steigerung der Festigkeit der entsprechenden Legierung erzielt werden kann.

Eine weitere vorteilhafte Weiterbildung der Erfindung sieht vor, dass die erfindungsgemäße Legierung einen Kornfeiner in einem Anteil von 0,01 bis 0,5 Gew.-% besitzt, wobei der Kornfeiner den entsprechenden Anteil der primären Legierungskomponente ersetzt. Als Kornfeiner werden insbesondere Yttrium, und/oder Cer und/oder Germanium eingesetzt.

Weitere vorteilhafte Weiterbildungen der Erfindung sind Gegenstand der Unteransprüche.

Weitere Einzelheiten und Vorteile der Erfindung sind den nachfolgenden Ausführungsbeispielen zu entnehmen.

Ein erstes Ausführungsbeispiel einer Legierung sieht vor, dass die Legierung als primäre Legierungskomponente 95 bis 99,5 Gew.-% Platin und als sekundäre Legierungskomponente 0,05 bis 5 Gew.-%, vorzugsweise 1 bis 5 Gew.-% Gallium, weiter vorzugsweise 2 bis 3 Gew.-% Gallium enthält, wobei sich die Anteile von Platin und Gallium, von üblichen Beimischungen und Spurenelementen abgesehen und unter Berücksichtigung von metallurgischen Toleranzen, zu 100 Gew.-% addieren. Vorzugsweise beträgt der Anteil von Platin zwischen 95 und 96 Gew.-%, so dass der Anteil von Gallium dann 4 bis 5 Gew.-% beträgt. Bei diesem Ausführungsbeispiel sowie bei den folgenden soll die Angabe eines Anteilsbereichs sämtliche in diesen Bereich fallende Zwischenwerte einschließen. Auf diesen Umstand wird bei der nachfolgenden Beschreibung der weiteren Ausführungsbeispiele nicht mehr explizit hingewiesen.

Ein zweites Ausführungsbeispiel einer Legierung sieht vor, dass die Legierung 95 bis 99,5 Gew.-% Palladium und 0,5 bis 5 Gew.-%, vorzugsweise 1 bis 5 Gew.-% Gallium enthält. Vorzugsweise enthält die Legierung 95 bis 96 Gew.-% Palladium und folglich 4 bis 5 Gew.-% Gallium. Die vorgenannten Bestandteile ergänzen sich wieder, von üblichen Beimischungen und Spurenelementen abgesehen und unter Berücksichtigung von metallurgischen Toleranzen zu 100 Gew.-%. In der folgenden Beschreibung wird der vorgenannte Umstand - Ergänzung der einzelnen Komponenten einer Legierung zu 100 Gew.-% - nicht mehr explizit erwähnt, dem Fachmann ist klar ersichtlich, dass sich die nachfolgend angegebenen Anteile der einzelnen Legierungen zu 100 Gew.-% in der vorgenannten Art und Weise ergänzen.

Ein drittes bzw. viertes Ausführungsbeispiel sieht vor, dass bei der Legierung gemäß den vorangehenden Ausführungsbeispielen ein Anteil zwischen 0,05 bis 5 Gew.-%, vorzugsweise ein Anteil von 1 bis 5 Gew.-%, weiter vorzugsweise ein Anteil zwischen 2 bis 3 Gew.-% oder 1 bis unter 2,5 Gew.-% oder zwischen 3 und 5 Gew.-% des in dieser Legierung als sekundäre Legierungskomponente enthaltenen Galliums durch eines oder mehrere Metalle aus der Gruppe Indium, Aluminium und Zinn ersetzt ist. Der Anteil der vorgenannten Komponenten beträgt dabei vorzugsweise jeweils zwischen 0,05 und 5 Gew.-%, so dass sich die Anteile von Indium, Aluminium und/oder Zinn zu 0,05 bis 5 Gew.-% aufaddieren und somit dem Anteil des durch die vorgenannten Komponenten ersetzten Galliums entsprechen. Vorzugsweise ist vorgesehen, dass der jeweilige Anteil von Indium, Aluminium und/oder Zinn zwischen 0,05 bis 5 Gew.-%, weiter vorzugsweise 1 bis 5 Gew.-%, weiter vorzugsweise zwischen 2 bis 4 Gew.-% beträgt und die Summe der Anteile dieser Metalle dem ersetzten Anteil des in der beschriebenen Legierung als sekundäre Legierungskomponente enthaltenen Galliums entspricht.

Wird hierbei Indium als alleiniges Gallium ersetzendes Element verwendet, so wird bevorzugt, dass der Anteil des Indiums zwischen 0,5 bis 5 Gew.-%, weiter vorzugsweise zwischen 1 bis unter 2,5 Gew.-% oder zwischen 3 und 3 Gew.-% beträgt.

Ein fünftes bzw. sechstes Ausführungsbeispiel sieht vor, dass 0,05 bis 4,5 Gew.-%, vorzugsweise 1 bis 4 Gew.-%, weiter vorzugsweise 2 bis 3 Gew.-% der primären Legierungskomponente des ersten oder dritten bzw. des zweiten oder vierten Ausführungsbeispiels, also Platin bzw. Palladium, durch mindestens ein Metall aus der Gruppe Kupfer, Silber und Gold ersetzt ist.

Ein siebtes bzw. achtes Ausführungsbeispiel sieht vor, dass 0,05 bis 4,5 Gew.-%, vorzugsweise 1 bis 4 Gew.-% und weiter vorzugsweise 2 bis 3 Gew.-% des Platins bzw. des Palladiums einer der vorstehend beschriebenen Ausführungsbeispiele durch mindestens ein Metall aus der Gruppe Iridium, Ruthenium, Rhodium und Rhenium sowie - bei einer auf dem ersten, dritten oder fünften Ausführungsbeispiel aufbauenden Legierung - durch Palladium und - bei einer auf dem zweiten, vierten oder sechsten Ausführungsbeispiel aufbauenden Legierung - durch Platin ersetzt ist.

Ein neuntes bzw. zehntes Ausführungsbeispiel sieht vor, dass 0,05 bis 4,5 Gew.-%, vorzugsweise 1 bis 4 Gew.-% und weiter vorzugsweise 2 bis 3 Gew.-% des Platins bzw. des Palladiums einer der Legierung gemäß den vorangehenden Ausführungsbeispielen durch mindestens ein Metall aus der Gruppe Eisen und Mangan ersetzt ist.

Ein elftes bzw. zwölftes Ausführungsbeispiel sieht vor, dass ein Anteil von 0,05 bis 4,5 Gew.-%, vorzugsweise 1 bis 4 Gew.-% und weiter vorzugsweise 2 bis 3 Gew.-% der in der entsprechenden Legierung vorhandenen primären Legierungskomponente durch mindestens ein Refraktärmetall der sechsten Nebengruppe (Chrom, Molybdän, Wolfram) ersetzt ist, wobei sich die einzelnen Anteile der bei der erfindungsgemäßen Legierung enthaltenen Refraktärmetalle zu dem vorgenannten Anteil ergänzen.

Ein dreizehntes bzw. vierzehntes Ausführungsbeispiel sieht vor, dass ein Anteil von 0,05 bis 4,5 Gew.-%, vorzugsweise 1 bis 4 Gew.-% und weiter vorzugsweise 2 bis 3 Gew.-% der in der entsprechenden Legierung vorhandenen primären Legierungskomponente durch mindestens ein Refraktärmetall der fünften Nebengruppe (Vanadium, Niob, Tantal) ersetzt ist, wobei sich die einzelnen Anteile der bei der erfindungsgemäßen Legierung enthaltenen Refraktärmetalle zu dem vorgenannten Anteil der setzten Primärlegierung ergänzen.

Ein fünfzehntes bzw. sechzehntes Ausführungsbeispiel sieht vor, dass ein Anteil von 0,05 bis 4,5 Gew.-%, vorzugsweise 1 bis 4 Gew.-% und weiter vorzugsweise 2 bis 3 Gew.-% der in der entsprechenden Legierung vorhandenen primären Legierungskomponente durch mindestens ein Refraktärmetall der vierten Nebengruppe (Zirkonium, Hafnium) ersetzt ist, wobei sich die einzelnen Anteile der bei der erfindungsgemäßen Legierung enthaltenen Refraktärmetalle zu dem vorgenannten Anteil ergänzen.

Die vorgenannten Metalle des fünften bis sechzehnten Ausführungsbeispiels, bei denen jeweils die primäre Legierungskomponente Platin oder Palladium durch eines oder mehrere der vorgenannten Metalle ersetzt ist, sind folglich jeweils in einem Anteil zwischen 0,05 und 4,5 Gew.-%, vorzugsweise in einem Anteil zwischen 1 und 4 Gew.-% und weiter vorzugsweise in einem Anteil zwischen 2 und 3 Gew.-% vorhanden, wobei der Anteil des oder der die primäre Legierungskomponente substituierenden Metalle gleich dem Gewichtsanteil der ersetzten primären Legierungskomponente ist.

Weitere Ausführungsbeispiele sehen vor, dass bei den vorgenannten Legierungen Platin bzw. Palladium in einem Anteil von 0,01 bis 0,5 Gew.-% durch einen Kornfeiner, insbesondere Yttrium und/oder Cer und/oder Germanium, ersetzt ist.

Die vorgenannten Legierungen werden in an und für sich bekannter und daher nicht mehr näher beschriebenen Art und Weise schmelzmetallurgisch hergestellt, indem die entsprechenden Gewichtsanteile der Legierungskomponenten aufgeschmolzen werden.

Die vorstehend definierten Platinlegierungen sowie die ebenfalls beschriebenen Palladiumlegierungen eignen sich insbesondere zur pulvermetallurgischen Fertigung von dreidimensionalen Körpern unter Verwendung eines aus den vorstehend beschriebenen Legierungen gewonnenen Pulvers aus sphärischen Edelmetallpartikeln.

Zur Herstellung der entsprechenden Edelmetallpulver wird vorzugsweise die schmelzmetallurgisch hergestellte Legierung gemäß einem der vorstehend beschriebenen Ausführungsbeispiele in einer Verdüsungsanlage bei ca. 2000 C° Grad erschmolzen und mit einem inerten Gas unter Druck verdüst. Die fein verteilten Schmelztröpfchen des derart verdüsten Pulvers erstarren rasch zu sphärischen Edelmetallpartikeln. Ein Verfahren zur Herstellung derartiger Pulverpartikel ist beispielsweise in der europäischen Patentschrift EP 3 216 545 B1 beschrieben, auf weiche zur Vermeidung von Wiederholungen Bezug genommen und deren technische Lehre durch diese Bezugnahme zum Gegenstand dieser Anmeldung gemacht wird.

Es wird bevorzugt, dass die Partikelgrößenverteilung, bestimmt als Massenverteilungssummenkurve, einen d₁₀-Wert von größer gleich 5 µm und/oder einen d₉₀-Wert von kleiner gleich 100 µm aufweist. Weitere bevorzugte Bereiche werden durch einen d₁₀-Wert von d₁₀ größer gleich 5 µm und/oder einem d90-Wert von d90 kleiner gleich 50 µm und weiter vorzugsweise durch d₁₀ größer gleich 10 µm und/oder d₉₀ kleiner gleich 45 µm festgelegt. Dem Fachmann ist aber ersichtlich, dass die vorstehend aufgeführten bevorzugten Bereiche nur exemplarischen Charakter besitzen und nicht als feste Bereichsgrenzen zu verstehen sind. Vielmehr sind von vorgenannten Angaben auch alle Zwischenwerte von d₁₀ und d₉₀ umfasst, die zwischen den vorgenannten Werten liegen. Insbesondere sind daher auch Partikelgrößenverteilungen, deren d₁₀-Wert ein Wert zwischen 5 µm und 10 µm und/oder deren d₉₀-Wert ein Wert zwischen 45 µm und 100 µm ist, möglich.

Zur Herstellung eines dreidimensionalen Körpers wird vorzugsweise vorgesehen, dass dieser dreidimensionale Körper mittels eines an und für sich bekannten und daher nicht mehr näher beschriebenen pulverbasierten Verfahrens hergestellt wird. Bei einem Pulverbett-basierten Verfahren ist vorzugsweise vorgesehen, dass das wie vorstehend erzeugte Edelmetall-Pulver in Form einer ersten Schicht auf einem Substrat aufgetragen und mit einer energiereichen Strahlung, insbesondere einer Laserstrahlung oder einen hochenergetischen Elektronenstrahl, aufgeschmolzen wird. Dann wird die derart aufgeschmolzene Schicht erstarren gelassen. An den vorgenannten Verfahrensschritt schließt sich dann das Aufbringen einer weiteren Schicht des Pulvers auf der ersten Schicht, ein zumindest teilweises Aufschmelzen des Pulvers der weiteren Schicht mit der energiereichen Strahlung und ein Erstarrenlassen der aufgeschmolzenen weiteren Schicht des Pulvers an. Die vorgenannten Schritte werden dann entsprechend wiederholt.

Es ist auch möglich, den dreidimensionalen Körper mittels eines Metallpulverspritzgußverfahrens (Metal Injection Molding - MIM), eines Schmelz- oder Sinterverfahrens mittels energiereicher Strahlung, insbesondere einer Laserstrahlung oder einem hochenergetischen Elektronenstrahl, oder ein sinterbasiertes additives Fertigungsverfahren wie z.B. Binder Jetting, um nur einige Beispiele für eine derartige pulverbasierte Fertigung eines dreidimensionalen Körpers zu nennen, herzustellen.

Es wird bevorzugt, dass der gemäß einem der vorstehend beschriebenen Verfahren hergestellte dreidimensionale Körper einer Wärmebehandlung unterzogen wird, wobei die Wärmebehandlung in einem Temperaturbereich zwischen 600 °C und 700 °C durchgeführt wird. Die Behandlungsdauer beträgt, in Abhängigkeit von der Bauteilgröße, ungefähr 20 bis 40 Minuten. Es hat sich gezeigt, dass durch die Wärmebehandlung die Härte der vorstehend beschriebenen Legierungen und somit des aus diesen pulvermetallurgisch hergestellten dreidimensionalen Körpers deutlich erhöht werden kann.

Eine Legierung, die 95 Gew.-% Platin und als sekundäre Legierungskomponente 5 Gew.-% Gallium (einschließlich eventueller Kornfeiner) aufweist, besitzt eine Härte von ca. 303 HV ohne Wärmebehandlung und eine Härte von ca. 360 HV nach einer Wärmebehandlung.

Eine beispielhafte ternäre Legierung, die 95 Gew.-% Platin und 2,5 Gew.-% Gallium sowie als Rest eine weitere der vorstehend beschriebenen sekundären Legierungskomponenten aufweist, besitzt eine Härte von ca. 240 HV ohne Wärmebehandlung und von 330 HV nach einer Wärmebehandlung. Bei der vorstehenden Legierung wurde nicht explizit darauf hingewiesen, dass in vorgenannten Gewichtsanteilen auch Kornfeiner enthalten sein können. Dies gilt auch für die nachstehend aufgeführten Legierungen.

Eine weitere beispielhafte ternäre Legierung, die 95 Gew.-% Platin und zu gleichen Anteilen Kupfer (als das den entsprechenden Anteil der primären Legierungskomponente Platin ersetzendes Metall) und Gallium aufweist, besitzt ohne Wärmebehandlung eine Härte von ca. 254 HV und nach der Wärmebehandlung eine Härte von ca. 330 HV.

Eine Legierung, die 95 Gew.-% Platin und 5 Gew.-% Zinn (als das den entsprechenden Anteil der primären Legierungskomponente Platin ersetzendes Metall) aufweist, besitzt ohne Wärmebehandlung eine Härte von ca. 220 HV und mit der Wärmebehandlung eine Härte von ca. 262 HV.

Entsprechende Werte ergeben sich auch bei einer Legierung, deren primäre Legierungskomponente Palladium ist.

## Patentansprüche

1. Pulver aus sphärischen Partikeln einer Edelmetall-Legierung, welche als primäre Legierungskomponente Platin oder Palladium in einem Anteil von 95 bis 99,5 Gew.-%, vorzugsweise in einem Anteil von 95 bis 96 Gew.-% enthält, **dadurch gekennzeichnet, dass** die Legierung als sekundäre Legierungskomponente 0,5 bis 5 Gew.-%, vorzugsweise 1 bis 5 Gew.-% Gallium enthält, wobei sich die Anteile der primären und der sekundären Legierungskomponente, von üblichen Verunreinigungen und Spurenelementen sowie unter Berücksichtigung von metallurgischen Toleranzen abgesehen, zu 100 Gew.-% ergänzen, und dass das Pulver eine Partikelgrößenverteilung mit einem d₁₀-Wert von größer gleich 5 µm und/oder einem d₉₀-Wert von kleiner gleich 100 µm, vorzugsweise mit einem dio-Wert von größer gleich 5 µm und/oder einem d₉₀-Wert von kleiner gleich 50 µm und weiter vorzugsweise mit einem dio-Wert von größer gleich 10 µm und/oder einem d₉₀-Wert von kleiner gleich 45 µm besitzt.

2. Pulver nach Anspruch 1, **dadurch gekennzeichnet, dass** bei einer Platin als primäre Legierungskomponente enthaltenden Legierung 0,05 bis 4,5 Gew.-%, vorzugsweise 1 bis 4 Gew.-%, weiter vorzugsweise 2 bis 3 Gew.-% Platin durch Palladium und bei einer Palladium als primäre Legierungskomponente enthaltenden Legierung 0,05 bis 4,5 Gew.-%, vorzugsweise 1 bis 4 Gew.-%, weiter vorzugsweise 2 bis 3 Gew.-% Palladium durch Platin ersetzt ist.

3. Pulver nach einem der vorangehenden Ansprüche, **dadurch gekennzeichnet, dass** 0,05 bis 5 Gew.-%, vorzugsweise 1 bis 5 Gew.-%, weiter vorzugsweise 2 bis 3 Gew.-% oder 1 bis unter 2,5 Gew.-% oder 3 bis 5 Gew.-% der sekundären Legierungskomponente Gallium durch mindestens ein Metall aus der Gruppe Indium, Aluminium und Zinn ersetzt ist.

4. Pulver nach einem der vorangehenden Ansprüche, **dadurch gekennzeichnet, dass** 0,05 bis 4,5 Gew.-%, vorzugsweise 1 bis 4 Gew.-%, weiter vorzugsweise 2 bis 3 Gew.-% der primären Legierungskomponente durch mindestens ein Metall aus der Gruppe Kupfer, Silber und Gold und/oder durch mindestens ein Metall aus der Gruppe Iridium, Ruthenium, Rhodium und Rhenium ersetzt ist.

5. Pulver nach einem der vorangehenden Ansprüche, **dadurch gekennzeichnet, dass** 0,05 bis 4,5 Gew.-%, vorzugsweise 1 bis 4 Gew.-%, weiter vorzugsweise 2 bis 3 Gew.-% der primären Legierungskomponente durch mindestens ein Metall aus der Gruppe Chrom, Molybdän, Wolfram und/oder mindestens ein Metall aus der Gruppe Vanadium, Niob und Tantal und/oder mindestens ein Metall aus der Gruppe Zirkonium und Hafnium ersetzt ist.

6. Pulver nach einem der vorangehenden Ansprüche, **dadurch gekennzeichnet, dass** die Edelmetall-Legierung einen Kornfeiner in einem Anteil von 0,01 bis 0,5 Gew.-% aufweist, wobei der Kornfeiner den entsprechenden Anteil der primären Legierungskomponente ersetzt, wobei der Kornfeiner insbesondere Yttrium und/oder Cer und/oder Germanium ist.

7. Verwendung eines edelmetallhaltigen Pulvers zur pulverbasierten Fertigung eines dreidimensionalen Körpers, **dadurch gekennzeichnet, dass** ein Edelmetallpulver gemäß einem der Ansprüche 1 bis 6 verwendet ist.

8. Pulverbasiertes Verfahren zur Herstellung eines dreidimensionalen Körpers aus einem edelmetallhaltigen Pulver, **dadurch gekennzeichnet, dass** ein Edelmetallpulver gemäß einem der Ansprüche 1 bis 6 verwendet wird.

9. Additives Fertigungsverfahren zur Herstellung eines dreidimensionalen Körpers, **dadurch gekennzeichnet, dass** das additive Fertigungsverfahren folgende Schritte umfasst:
a) Aufbringen eines Pulvers nach einem der Ansprüche 1 bis 6 in Form einer ersten Schicht auf einem Substrat,
b) zumindest teilweise Aufschmelzen des Pulvers der ersten Schicht mit einer energiereichen Strahlung, insbesondere einer Laserstrahlung, und Erstarrenlassen des aufgeschmolzenen Pulvers,
c) Aufbringen einer weiteren Schicht des Pulvers auf der ersten Schicht,
d) zumindest teilweise Aufschmelzen des Pulvers der weiteren Schicht mit der energiereichen Strahlung und Erstarrenlassen des aufgeschmolzenen Pulvers und
e) Wiederholen der Schritte c) und d).

10. Verfahren nach einem der Ansprüche 8 oder 9, **dadurch gekennzeichnet, dass** der durch das entsprechende Verfahren erzeugte dreidimensionale Körper einer Wärmebehandlung unterzogen wird.

11. Dreidimensionaler Körper aus einer Edelmetallpulver, **dadurch gekennzeichnet, dass** das Edelmetallpulver ein Pulver gemäß einem der Ansprüche 1 bis 6 ist.
